Europäisches Patentamt

European Patent Office

Office européen des brevets

(19)

(11) Veröffentlichungsnummer: **0 357 929**
**A2**

## (12) EUROPÄISCHE PATENTANMELDUNG

(21) Anmeldenummer: 89113728.3

(22) Anmeldetag: 25.07.89

(51) Int. Cl.⁵ **B28C 7/00 , E04G 21/04**

(30) Priorität: 08.09.88 DE 3830479

(43) Veröffentlichungstag der Anmeldung:
**14.03.90 Patentblatt 90/11**

(84) Benannte Vertragsstaaten:
**AT DE ES IT**

(71) Anmelder: **TRICOSAL GMBH**
**Robert-Hansen-Strasse 1**
**D-7918 Illertissen(DE)**

(72) Erfinder: **Braun, Georg**
**Stettiner Weg 8**
**D-7919 Bellenberg(DE)**
Erfinder: **Gindl, Otto**
**Bahnhofstrasse 3**
**A-9800 Spittal(AT)**
Erfinder: **Goertz, Hans**
**Herberger Weg 11**
**D-7905 Dietenheim(DE)**
Erfinder: **Schauritsch, Oskar**
**Pössnitz 80**
**A-8463 Leutschach Gde. Glanz(AT)**
Erfinder: **Strappler, Guenther**
**Grete-Gulbranssonweg 12/17**
**A-6700 Bludenz(AT)**

(74) Vertreter: **Patentanwälte RUFF, BEIER und**
**SCHÖNDORF**
**Neckarstrasse 50**
**D-7000 Stuttgart 1(DE)**

(54) **Verfahren und Vorrichtung zum Dosieren von flüssigen Erstarrungsbeschleunigern zum Austragen von Spritzbeton.**

(57) Eine Vorrichtung (2) weist eine Dosiereinrichtung (10) auf, mit welcher beim Herstellen und gleichzeitigen laufenden Austragen von Spritzbeton so gefahren werden kann, daß die zugeführte Menge an Erstarrungsbeschleuniger stets innerhalb einer Regeltoleranz im Verhältnis zum Zementanteil etwa konstant gehalten werden kann oder daß sogar bei einer Verringerung der relativen Wassermenge gegenüber der relativen Trockenmenge der Betonmischung zumindest keine entsprechend starke Verringerung der relativen Beschleunigermenge in der Trockenmenge erfolgt, sondern ggf. eine relative Erhöhung der Beschleunigermenge zur Verfügung steht. Die Durchflußmenge des Erstarrungsbeschleunigers wird viskositätsunabhängig gemessen und der Erstarrungsbeschleuniger wird pumpenfrei gefördert.

## Verfahren und Vorrichtung zum Dosieren von flüssigen Erstarrungsbeschleunigern zum Austragen von Spritzbeton

Die Erfindung betrifft ein Verfahren zum laufenden bzw. kontinuierlichen Mischen und Austragen von Spritzbeton, wobei erfindungsgemäß zur Erzielung einer einfachen bzw. genauen Handhabung eine relative, beispielsweise mit Zuschlagstoffen, wie Sand, Kies o.dgl., zu einer Trockenmischung gemischte Zementmenge im Durchlauf mit einer relativen, einen Naßgrad bzw. die Sättigung des Spritzbetons bestimmenden Wassermenge sowie mit einer relativen, auf die relative Zementmenge als Soll-Wert bezogenen Beschleunigermenge eines flüssigen Erstarrungsbeschleunigers zu Spritzbeton vermischt wird. Ferner betrifft die Erfindung eine Vorrichtung zur Durchführung des Verfahrens.

Die Herstellung von Spritzbeton dient in der Regel dazu, eine Flüssigbetonmischung bereitzustellen, die vom Zeitpunkt der Beimengung des chemischen Erstarrungsbeschleunigers in sehr kurzer Zeit, nämlich zum Beispiel in weniger als einer Minute erstarrt und rechtzeitig vor Beginn bzw. Beendigung dieser Erstarrung bereits an die zu betonierende Bauwerksfläche gelangt ist. Daher wird die Flüssigbetonmischung im Durchlauf hergestellt und unmittelbar nach ihrer Vermischung unter Druck als Strahl aus einer Spritzdüse ausgetragen, die unmittelbarer Bestandteil eines Mischkopfes sein kann und beispielsweise durch Tragen von Hand geführt sowie gegen die Bauwerksfläche gerichtet wird. Der Austrag erfolgt insofern unmittelbar nach der Herstellung des Flüssigbetons aus der trockenen Betonmischung bzw. nach der Beimischung des Erstarrungsbeschleunigers.

Als Erstarrungsbeschleuniger werden bevorzugt Erdalkali-Beschleuniger, vor allem Aluminat-Beschleuniger in einem auf die Zementmenge bezogenen Anteil in der Größenordnung von etwa 5 % verwendet, so daß zum Beispiel für 380 kg Zement je Kubikmeter Beton etwa 15 l flüssiger oder trockener Erstarrungsbeschleuniger verwendet werden. Es können aber auch Silikat- bzw. Wasserglas-Beschleuniger verwendet werden, jedoch werden hier in der Regel etwa 15 - 20 % Anteil benötigt.

Bevorzugt wird der Spritzbeton im Trockenspritzverfahren verarbeitet, bei welchem die trockene Betonmischung erst kurz vor dem Austrag nahezu gleichzeitig mit Wasser und Er-starrungsbeschleuniger vermischt wird, wobei letzterer dem Wasser vor der Zumischung zur Betonmischung beigegeben ist. Für besondere Einsatzzwecke kann der Spritzbeton jedoch auch im sog. Naßspritzverfahren verarbeitet werden, bei welchem zuerst eine Mischung aus Zement, Zuschlag, evtl. auch Zusatzstoff und Wasser hergestellt, diese dann im wesentlichen luftfrei im Dichtstrom zu einem Austragkopf gefördert und in dessen Bereich durch Zuführung von Förderluft zu einem Dünnstrom umgewandelt wird, wobei mit der Förderluft bzw. im Bereich des Austragkopfes der Erstarrungsbeschleuniger zugemischt wird.

Beim Trockenspritzverfahren kann vom Austragkopf verhältnismäßig einfach der Naß- bzw. Sättigungsgrad durch Veränderung der Wasserzufuhr geändert werden, während im Falle des Naßspritzverfahrens eine solche Steuerung nicht möglich ist. Die Möglichkeit einer laufenden Änderung des Naßgrades des Spritzbetons ist vor allem erwünscht, um unterschiedlich gegebenen Anforderungen, beispielsweise der Lage einer Bauwerksfläche gegenüber einer Gravitationsachse, klimatischen Bedingungen, Oberflächenstruktur der Bauwerksfläche und ähnlichem gerecht werden zu können. Beispielweise ist im Falle einer geneigten oder über Kopf liegenden Bauwerksfläche ein geringerer Naßgrad als im Falle einer aufrechten oder bodenseitigen Bauwerksfläche erwünscht, um dem Ablösen bzw. Abfließen der Flüssigbetonmischung vor der Erstarrung entgegenzuwirken. Mit der Verringerung der pro Zeiteinheit durch den Mischkopf durchlaufenden Wassermenge verringert sich aber auch die pro Zeiteinheit dem Mischkopf und damit der pro Zeiteinheit in diesen einströmenden Trockenmenge zugeführte Menge des Erstarrungsbeschleunigers, was zu einer Verlängerung der Erstarrungszeit gerade in solchen Fällen führt, in denen eine schnelle bzw. sogar noch schnellere Erstarrung erwünscht ist.

Auch eine Überdosierung des Erstarrungsbeschleunigers bringt nicht nur deshalb wesentliche Nachteile mit sich, weil der Erstarrungsbeschleuniger relativ teuer ist, sondern auch, weil des weiteren bei zu hoher Dosierung, zum Beispiel im Falle von Erdalkali-Beschleunigern eine Dosierung über 10 %, auch zu einer Verzögerung der Betonerstarrung führen kann.

Unerwünschte Änderungen des Anteiles des Erstarrungsbeschleunigers können sich zum Beispiel durch Druckschwankungen in der Wasserversorgung für die Spritzbeton-Mischung, temperaturbedingte Viskositätsänderungen des Erstarrungsbeschleunigers, durch Änderungen der Fördergeschwindigkeit bzw. des Förderdruckes des Erstarrungsbeschleunigers oder dadurch ergeben, daß aufgrund von Einstelländerungen beispielsweise der Wasserzufuhr am Austragkopf Rückkoppelungswirkungen hervorgerufen werden. Baustellen sind meist mit einer in sich geschlossenen eigenen Wasser- und Luftversorgung für zahlreiche Verbraucher der Baustelle ausgestattet, so daß sich durch An- und Abschalten solcher Verbraucher laufend Druckänderungen ergeben, die zu Störungen in der exakten Dosierung des Erstarrungsbeschleunigers führen können.

Der Erfindung liegt des weiteren auch die Aufgabe zugrunde, ein Verfahren bzw. eine Vorrichtung der genannten Art zu schaffen, durch welche Nachteile bekannter Lösungen vermieden sind und mit welchen insbesondere auf einfache Weise die Erstarrungsgeschwindigkeit des Spritzbetons auf einen gewünschten Ist-Wert eingestellt werden kann. Ggf. soll die Erstarrungsgeschwindigkeit an die jeweiligen Erfordernisse angepaßt werden können, ohne zwangsläufig mit der Senkung des Naßgrades entsprechend stark absinken oder ansteigen zu müssen.

Zur Lösung dieser Aufgabe ist bei einem der Verfahren der beschriebenen Art gemäß der Erfindung vorgesehen, daß ein Ist-Wert der zugeführten relativen Beschleunigermenge laufend gemessen, mit dem Soll-Wert verglichen und dann auf letzteren nachgeregelt wird. Dadurch kann die relative Beschleunigermenge innerhalb einer Regeltoleranz gegenüber der relativen Zementmenge bzw. der relativen Trockenmischung in einem engen Bereich bzw. im wesentlichen über die gesamte Verarbeitungszeit konstant gehalten werden, wobei die relative Beschleunigermenge innerhalb der Regeltoleranz dauernd um den Soll-Wert schwankt. Die Regeltoleranz liegt zweckmäßig höchstens bei ± 0,5 %, d.h. daß sie zum Beispiel im Falle eines Soll-Wertes von 5 % zwischen 4,5 und 5,5 % liegt und insofern um 10 %, bezogen auf den Beschleuniger selbst, schwankt. Bevorzugt wird jedoch eine Regeltoleranz von weniger als 0,3 %, vorzugsweise höchstens etwa 0,2 % angewandt.

Das erfindungsgemäße Verfahren kann sowohl im Naßspritz-wie auch im Trockenspritzverfahren angewandt werden. Im Falle des Trockenspritzverfahrens wird erfindungsgemäß die relative Beschleunigermenge vor Zumischung zur Zementmenge bzw. zur Trockenmischung im Durchlauf der relativen Wassermenge zugemischt und dann die so gebildete relative Mischmenge aus Wasser und Erstarrungsbeschleuniger zweckmäßig in einem Austrag-Mischkopf mit der durch Druckluft trocken zugeführten Trockenmischung ebenfalls im Durchlauf vermischt.

Um auf sichere Weise eine einfache und zu einer guten Durchmischung führende Beigabe des Erstarrungsbeschleunigers zum Wasser bzw. zur Mischung aus Wasser und Trockenmischung zu gewährleisten, wird der Erstarrungsbeschleuniger zweckmäßig mit einem gegenüber diesen höheren Förderdruck gefördert, wobei als Differenzdruck 1,5 - 2 bar bevorzugt werden. Zur Justierung dieses Differenzdruckes ist zweckmäßig nicht der Förderdruck des Erstarrungsbeschleunigers, sondern der andere Förderdruck veränderbar.

Für die bereits geschilderten Fälle kann eine Veränderung bzw. Erhöhung des Anteiles des Erstarrungsbeschleunigers durch entsprechende manuelle Einstellung des Sollwertes vorgenommen werden. In aller Regel jedoch wird die relative Beschleunigermenge zweckmäßig innerhalb der Regeltoleranz im wesentlichen konstant gegenüber der relativen Zementmenge gehalten, so daß nur bei bzw. durch Änderung der relativen Wassermenge das Mischungsverhältnis zwischen Wasser und Erstarrungsbeschleuniger geändert wird. Zur weiteren Vereinfachung der Anwendung wird auch die rela tive Zementmenge im wesentlichen konstant gefördert und nur die relative Wassermenge sowie innerhalb der Regeltoleranz die relative Beschleunigermenge, bezogen auf die relative Zementmenge, geändert.

Damit keine unbefugte Erhöhung der angewendeten Beschleunigermenge im Rahmen der manuellen Eingriffsmöglichkeiten vorgenommen werden kann, werden diese manuellen Eingriffsmöglichkeiten durch Sperrung der mit ihrer Hilfe eingestellten Werte gegen unerwünschte Veränderungen gesichert.

Die Konstanthaltung der zugeführten Beschleunigermenge wird in noch genauerem Maße dadurch möglich, daß der Erstarrungsbeschleuniger zwischen einem Vorrat und einer Zumischstelle im wesentlichen nur entlang einer von bewegten Förderteilen freien Leitungsverbindung, vorzugsweise mit Druckluft bzw. durch Druckbeaufschlagung gefördert wird, so daß zum Beispiel auf Förderpumpen vollständig verzichtet werden kann.

Zur Erzielung eines besonders genauen Meßergebnisses der je Zeiteinheit in Durchflußrichtung zugeführten Beschleunigermenge wird diese zweckmäßig im wesentlichen viskositätsunabhängig gemessen, wobei sich eine induktive Messung als besonders vorteilhaft erwiesen hat. Hierfür werden zwei Elektroden so in den elektrisch leitenden und durchfließenden Erstarrungsbeschleuniger gebracht, daß Spannungsänderungen von der Flüssigkeit abgegriffen werden können, die in einem von zwei Spulen erzeugten Feld auftreten. Beispielsweise werden mit Beschleunigern auf Natriumaluminatbasis in wäßriger Lösung sehr gute Ergebnisse erzielt.

Um eine selbstregelnde, im wesentlichen stets auf den Soll-Wert gerichtete Nachregelung der relativen Beschleunigermenge zu ermöglichen, wird vorteilhaft ein Meßsignal der Beschleuniger-Durchflußmenge unmittelbar zu einem Regler geleitet, der ein Stellsignal abhängig von der Soll-/Ist-Wertabweichung erzeugt, und damit die Durchflußmenge über ein Stellventil beeinflußt. Mit einem geschlossenen, beispielsweise auf ein Drossel- bzw.

Regelventil wirkenden Regelkreis kann die relative Beschleunigermenge konstant gehalten werden.

Besonders vorteilhaft ist es, wenn die absolute durchfließende Beschleunigermenge, insbesondere durch Aufsummmieren der je Zeiteinheit durchfließenden Beschleunigermenge, gemessen und der Mengenwert gespeichert wird, da dann stets eine genaue Kontrolle des Verbrauches an Erstarrungsbeschleuniger ermöglicht wird und diese Menge mit der Menge an verarbeitetem Zement verglichen werden kann. Die genannten relativen Mengen, insbesondere des Erstarrungsbeschleunigers, werden zweckmäßig als Volumen erfaßt, können aber auch als Massen bestimmt werden.

Bei wenigstens einer Veränderung des Naßgrades des Spritzbetons kann, wie dargelegt, die relative Beschleunigermenge zumindest gegenüber der relativen Wassermenge und zwar gegenüber dieser gegenläufig verändert werden. Dabei soll zweckmäßig die auf die Zementmenge bezogene relative Beschleunigermenge gegenüber der relativen Trockenmenge im wesentlichen gleichzeitig zwischen Null und wesentlich weniger als gegenüber der relativen Wassermenge verändert werden. Dies könnte bei einer normalerweise nicht üblichen Steigerung der pro Zeiteinheit zugeführten Trockenmenge eine annähernd proportional gleiche Steigerung der pro Zeiteinheit zugeführten Beschleunigermenge und umgekehrt bei einer Verringerung dieser zugeführten Trockenmenge eine entsprechende Verringerung der Beschleunigermenge bedeuten. Durch die gegenläufige Veränderung der relativen Beschleunigermenge, die vorzugsweise im wesentlichen ausschließlich nur gegenüber der relativen Wassermenge und daher im wesentlichen nicht gegenüber der relativen Trockenmenge vorgenommen wird, kann der Trockenmenge im wesentlichen unabhängig von der dieser zugemischten Wassermenge eine gewünschte Menge an Erstarrungsbeschleuniger beigegeben werden, so daß beispielsweise bei einer Verringerung des Naßgrades der Flüssigbetonmischung die Erstarrungszeit gegenüber dem höheren Naßgrad zumindest etwa konstant gehalten oder sogar verkürzt werden kann.

Ein wesentlicher Vorteil der Erfindung liegt auch darin, daß der Erstarrungsbeschleuniger geregelt stets in einer optimalen Relativmenge zudosiert werden kann und deshalb nicht aus Sicherheitsgründen in der Regel überdosiert werden muß, was angesichts der hohen Erstellungskosten für den Erstarrungsbeschleuniger beträchtliche Kostenersparnisse mit sich bringt. Dies ist insbesondere zu erreichen, wenn bei einem Verfahren, bei dem der Naßgrad des Spritzbetons über eine vorbestimmte Naßgradspanne zwischen einem Maximalwert und einem Minimalwert verändert wird, die relative Beschleunigermenge gegenüber der relativen ven Wassermenge über im wesentlichen diese gesamte Naßgradspanne in beiden Richtungen der Veränderung der Naßgradspanne annähernd stufenlos kontinuierlich gegenläufig verändert wird, so daß eine lückenlose bzw. augenblicklich sofortige Anpassung der Beschleunigerkonzentration der relativen Wassermenge mit deren Veränderung gewährleistet ist. Es ist aber auch denkbar, nur zwei oder mehr einstellbare Naßgradstufen für den Spritzbeton vorzusehen und die relative Beschleunigermenge bzw. die Beschleunigerkonzentration ebenfalls nur in einer entsprechenden Anzahl von Stufen einzustellen.

Pro Kubikmeter fertige Betonmischung werden beispielsweise etwa 200 l, maximal bis 250 l Wasser innerhalb einer Mengentoleranz von ± 3 % und 15 l flüssiger Erstarrungsbeschleuniger der trockenen Betonmischung zugemischt, die beispielsweise je Kubikmeter aus etwa 300 kg Zement sowie Sand und Kies besteht und einem Volumen von etwa 785 l entspricht. Der Anteil des flüssigen Erstarrungsbeschleunigers liegt, bezogen auf das Zementgewicht im Beton, in der Größenordnung von 5 %. Wird ein relativ niedriger Naßgrad des Spritzbetons benötigt, so wird in diesem Beispiel der Anteil des Wassers auf etwa die Hälfte zurückgefahren, die Beschleunigerkonzentration im Wasser jedoch zumindest um das Doppelte erhöht, wobei dieser Naßgrad den geringsten Wert der Naßgradspanne darstellen kann, während deren höchster Wert mit der genannten doppelten Menge an Wasser erreicht wird.

Da der verringerte Naßgrad in der Regel dort angewandt wird, wo Gravitationseinwirkung zu Bewegungen im aufgespritzten Spritzbeton führen können, ist es zweckmäßig, wenn die relative Beschleunigermenge gegenüber der relativen Wassermenge geringfügig überproportional verändert wird, so daß die Erstarrungszeit nochmals verkürzt werden kann. Entsprechend ist es vorteilhaft, wenn die relative Wassermenge im Vergleich zur relativen Mischmenge aus Wasser und Erstarrungsbeschleuniger bei einer Reduzierung dieser Mischmenge überproportional reduziert wird. Dadurch kann in vorteilhafter Weise so verfahren werden, daß die relative Beschleunigermenge gegenüber der relativen Trockenmenge wenigstens angenähert konstant gehalten, vorzugsweise bei sinkender relativer Wassermenge erhöht werden kann.

Um die Beschleunigerkonzentration des Wassers sehr einfach an die jeweiligen Erfordernisse anpassen zu können, wird ein Signal zur Dosierung des Erstarrungsbeschleunigers vom Mischkopf über dessen pro Zeiteinheit ausgetragene Mischmenge über die zwischen dem Mischkopf und der Zudosierung des Erstarrungsbeschleunigers fließende Mischmenge stromaufwärts beispielsweise dadurch gegeben, daß der Durchfluß der Mischmenge vom Mischkopf aus reduziert wird, was zu einer entsprechenden Verringerung der gesamten, pro Zeiteinheit fließenden Mischmenge führt und daher als Signal für die Dosierung des Erstarrungsbeschleunigers abgeleitet werden kann.

Es ist denkbar, eine Durchflußsteuerung für die Wassermenge bzw. die Mischmenge so mit einer Durchflußsteuerung für den Erstarrungsbeschleuniger zu koppeln, daß diese zwangsläufig in der beschriebenen Weise entgegengesetzt gesteuert werden, ohne daß irgendeine Messung einer Durchflußmenge erforderlich ist. Die Steuerung der Durchflußmenge kann zum Beispiel jeweils durch ein Ventil gebildet sein, das im Falle zweier vorgesehener Naßgradstufen gekoppelt in zwei Betriebsstellungen einstellbar ist. Besonders vorteilhaft ist es jedoch, wenn zumindest die Veränderung der relativen Wassermenge beispielsweise anhand unmittelbarer Messung der pro Zeiteinheit durchfließenden Wassermenge erfaßt und als Funktion der erfaßten Veränderung, insbesondere der pro Zeiteinheit erfaßten Wassermenge die pro Zeiteinheit zudosierte Beschleunigermenge bestimmt wird. Dadurch kann insbesondere bei stufenloser Veränderung der Wassermenge die Beschleunigermenge sehr präzise angepaßt werden.

Die Erfassung kann vor der Zudosierung des Erstarrungsbeschleunigers an dem durchfließenden, noch unvermischten Wasser vorgenommen werden. Eine vorteilhafte Weiterbildung der Erfindung kann jedoch darin bestehen, daß die sich aufgrund der Veränderung der relativen Wassermenge ergebende Veränderung der Mischmenge aus Wasser und flüssigem, insbesonderem wäßrigem Erstarrungsbeschleuniger erfaßt und danach die gegenläufige Veränderung der relativen Beschleunigermenge bestimmt wird. Dadurch ist es stets möglich, sehr präzise die der Trockenmischung tatsächlich zugeführte Flüssigkeitsmenge und somit den effektiven Naßgrad festzustellen sowie ggf. zu beeinflussen.

Um angesichts der in der Regel sehr rauhen Bedingungen, z.B. im Tunnelbau, unter welchen das erfindungsgemäße Verfahren durchgeführt wird, möglichst robuste Verfahrensbedingungen zur Verfügung stellen zu können, ist es zweckmäßig, die Erfassung, vorzugsweise unmittelbar, nach der Zuführung des Erstarrungsbeschleunigers und ggf. in möglichst großem Abstand vor dem Mischkopf durchzuführen, der beispielsweise über Schlauchleitungen flexibel mit der Stelle der Zuführung des Erstarrungsbeschleunigers verbunden ist und daher gegenüber dieser im wesentlichen unbeeinträchtigt frei bewegt werden kann. Die in der Regel relativ empfindliche Meßstelle befindet sich dadurch weit entfernt von dem im Betrieb befindlichen Mischkopf bzw. der zugehörigen Spritzbetondüse, von welchen somit keinerlei Steuer- bzw. Regelleitungen, wie elektrische Leitungen, zur Dosierstelle für den Erstarrungsbeschleuniger geführt werden müssen.

Der flüssige Erstarrungsbeschleuniger kann, temperaturbedingt, verhältnismäßig starke Viskositätsschwankungen mit sich bringen, weshalb zur Erzielung einer hiervon im wesentlichen nicht beeinflußten Meßgenauigkeit die Veränderung der Mischmenge zweckmäßig viskositätsunabhängig, vorzugsweise mit einer elektromagnetischen Feldmessung gemessen wird. In jedem Fall ist es vorteilhaft, wenn die Menge des Erstarrungsbeschleunigers in Form von Volumenmengen dosiert wird, da hierfür relativ einfache Einrichtungen genügen und trotzdem eine recht hohe Dosiergenauigkeit zu erzielen ist.

Gemäß der Erfindung wird des weiteren eine Vorrichtung zum Austragen und laufenden Mischen von Spritzbeton vorgeschlagen, die eine Wasserzuführung und eine Trockenzuführung zur Erreichung einer Betonmischung aufweist und mit einer Zuführeinrichtung eines Erstarrungsbeschleunigers versehen ist. Diese Vorrichtung ist zur Lösung der genannten Aufgabe gemäß der Erfindung dadurch gekennzeichnet, daß für die Zuführung des Erstarrungsbeschleunigers eine Dosiereinrichtung vorgesehen ist, die von einer Steuer- bzw. Regeleinrichtung zur gegenüber der Veränderung der Wassermenge gegenläufigen relativen Veränderung der Beschleunigermenge insbesondere derart beeinflußt ist, daß die Beschleunigerkonzentration der Wassermenge nach bestimmten Dosierverhältnis zur pro Zeiteinheit durchfließenden Wassermenge verändert wird.

Insbesondere im Falle der Anwendung des Trockenspritzverfahrens ist die Wasserzuführung durch eine annähernd bis zum Mischkopf reichende Wasserleitung und die Trockenzuführung durch eine entsprechende Trockenleitung für die Betonmischung gebildet, wobei die Zuführeinrichtung für den Erstarrungsbeschleuniger an die Wasserleitung angeschlossen ist, welcher vorzugsweise eine einstellbare Drossel zur Veränderung der durchlaufenden Wassermenge zugeordnet ist.

Statt einer zwangsläufigen Koppelung der Drossel mit der Dosiereinrichtung ist nach einem weiteren Vorschlag gemäß der Erfindung zweckmäßig vorgesehen, daß die Regeleinrichtung von einer die Veränderung einer Durchflußmenge, insbesondere im wesentlichen der Wasserdurchflußmenge erfassenden Einrichtung beeinflußt ist. Insbesondere in diesem Fall kann die Regeleinrichtung zur vollautomatischen Veränderung der relativen Beschleunigermenge als Funktion der Veränderung der Wassermenge ausgebildet sein.

Obwohl der Erstarrungsbeschleuniger auch unmittelbar dem Mischkopf oder zumindest kurz vor diesem zugeführt werden kann, ergibt sich eine besonders robuste Ausgestaltung, wenn die Dosiereinrichtung eine Zuführung für den Erstarrungsbeschleuniger in die Wasserleitung aufweist, wobei die Zuführung zweckmäßig in Durchflußrichtung im Abstand vor dem Mischkopf, nämlich zweckmäßig im Bereich des von diesem abgekehrten Endes des flexiblen Flüssigkeitsschlauches vorgesehen ist. Ein Meßglied der Meßeinrichtung kann ebenfalls in entsprechender Entfernung vom Mischkopf bzw. von der Spritzbetondüse vorgesehen und so angeordnet sein, daß es in Durchflußrichtung zwar hinter der Zuführung für den Erstarrungsbeschleuniger liegt und somit ggf. auch zur Messung der Veränderung der Mischmenge aus Wasser und Erstarrungsbeschleuniger ausgebildet sein kann, jedoch vorzugsweise unmittelbar benachbart zur Zuführung für den Erstarrungsbeschleuniger bzw. im Bereich der Dosiereinrichtung angeordnet ist.

Aus den dargelegten Gründen ist das Meßglied der Meßeinrichtung bei einer bevorzugten Ausführungsform als viskositätsunabhängig messendes Meßglied ausgebildet, wobei es zweckmäßig keinerlei bewegbare mechanische Teile aufweist, sondern gegenüber der Meßstelle im wesentlichen mechanisch feststehend angeordnet und vorzugsweise durch ein Meßglied zur elektromagnetischen Feldmessung gebildet ist. Im Vergleich zu einer auch denkbaren Messung beispielsweise mittels eines Venturi-Rohres ergibt sich dadurch eine sehr störunanfällige Meßanordnung, wobei das Meßglied im Bereich eines auf voller Weite offenen, d.h. gegenüber den übrigen Leitungsabschnitten nicht verengten Leitungsabschnittes angeordnet sein kann.

Zur Verhinderung unbefugten Eingriffes in das Mischungsverhältnis zwischen Zement und Erstarrungsbeschleuniger ist vorteilhaft wenigstens eine Regeleinrichtung gegen Betätigung absperrbar, insbesondere in einem Gehäuse angeordnet, das vorzugsweise im wesentlichen die gesamte Regel- und/oder Steuereinrichtung aufnimmt.

In weiterer Ausgestaltung der Erfindung kann einerseits für die Trockenmenge eine Preßluft-Fördereinrichtung oder statt dessen bzw. zusätzlich hierzu andererseits für den Erstarrungsbeschleuniger eine Preßluft-Fördereinrichtung vorgesehen sein wobei beide Fördereinrichtungen zweckmäßig von einer gemeinsamen Druckquelle bzw. über eine gemeinsame Preßluftleitung versorgt werden. Ist der zur Verfügung stehende Netzdruck der Wasserleitung zu gering, beispielsweise unter 3 bar, so kann in dieser Flüssigkeitsleitung, vorzugsweise in Durchflußrichtung vor der Zuführung des Erstarrungsbeschleunigers eine Förderpumpe angeordnet sein, so daß die Zudosierung des Erstarrungsbeschleunigers in das Wasser in einem Bereich erfolgt, in welchem dieses mit genau kontrolliertem Druck bzw. genau vorbestimmter Strömungsgeschwindigkeit fließt.

Schließlich wird gemäß der Erfindung eine Anlage zum im wesentlichen kontinuierlichen Austragen und laufenden Herstellen von Spritzbeton vorgeschlagen, die mindestens eine von einer Druckquelle ausgehende Wasserleitung sowie wenigstens eine von einer Druckquelle ausgehende, für mindestens eine Betonmischung vorgesehene Trockenleitung aufweist, wobei diese Leitungen an einen eine Austragöffnung aufweisenden Mischkopf angeschlossen sind und die Anlage mit einer Zuführeinrichtung zur Zuführung eines Erstarrungsbeschleunigers in das Wasser sowie in der Wasserleitung mit einer einstellbaren Drossel versehen ist, die zur willkürlichen Veränderung der durchlaufenden Wassermenge dient. Zur Lösung der der Erfindung zugrundeliegenden Aufgabe ist bei einer solchen Anlage erfindungsgemäß vorgesehen, daß die Wasserleitung an eine Dosiereinrichtung für den Erstarrungsbeschleuniger angeschlossen ist, die eine Steuereinrichtung für die gegenüber der Veränderung der Wassermenge eine z. B. gegenläufige relative Veränderung der Beschleunigermenge aufweist.

Zweckmäßig ist die Trockenleitung an eine fahrbare Fördereinrichtung für die Betonmischung, beispielsweise ein mindestens zweiachsiges Kraftfahrzeug angeschlossen, welches hinter dem Mischkopf bzw. der Spritzdüse entsprechend dem Baufortschritt nachfahren kann und mit dem Mischkopf bzw. der Spritzdüse im wesentlichen ausschließlich durch flexible Schlauchleitungen verbunden ist. Die erfindungsgemäße Ausbildung eignet sich insbesondere zur Herstellung von Spritzbeton für den Tunnelbau. Die Dosiereinrichtung kann mit der Steuereinrichtung an dem Fördergerät angeordnet sein, so daß sie stets an diesem, beispielsweise zur Wartung, zugänglich sind.

Die erfindungsgemäße Ausbildung ist zweckmäßig so vorgesehen, daß, wenn erforderlich, innerhalb von höchstens 50 Sekunden, insbesondere etwa 40 Sekunden, eine bis zu mindestens 20 cm dick aufgetragene Spritzbetonschicht selbsttragend erstarrt bzw. ausreichend aushärtet.

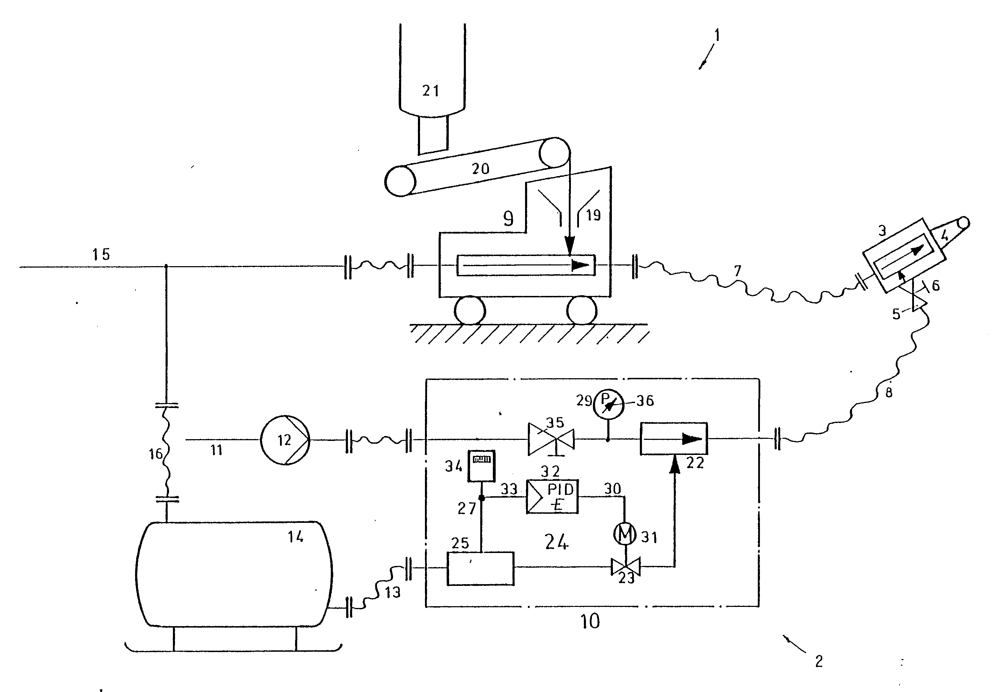

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen, für die hier Schutz beansprucht wird. Ein Ausführungsbeispiel der Erfindung ist vereinfacht in der Zeichnung dargestellt und wird im folgenden näher erläutert.

Die erfindungsgemäße Anlage 1 gemäß der Zeichnung dient zur gezielten kontinuierlichen Zudosierung eines flüssigen chemischen Erstarrungsbeschleunigers in Spritzbeton, derart, daß an der Spritzdüse der beigemischte Beton in ganz bestimmtem Verhältnis den jeweils erforderlichen Beschleunigeranteil enthält, obwohl sich die Viskosität des flüssigen Spritzbetonbeschleunigers aus verschiedenen Gründen laufend ändern kann und auch die gleichzeitige Wasserzugabe in Abhängigkeit von der erforderlichen Betonqualität von dem, die Spritzbetondüse bedienenden Bedienungsmann laufend geändert wird. Durch eine sinnvolle Kombination innerhalb einer Vorrichtung 2 der Anlage 1 wird dabei trotz wechselnder Parameter, nämlich unterschiedliche Bezugsmengen, unterschiedliche Förderdrücke und laufend wechselnde Viskosität des Spritzbeton- bzw. Erstarrungsbeschleunigers vollautomatisch eine gezielte Dosierung, bezogen auf den Zementanteil des beigemischten Betons, erreicht.

Die Vorrichtung 2 weist die vom Bedienungsmann von Hand zu führende und gegen die zu betonierende Bauwerksfläche zu richtende, tragbare Spritzdüse 4 auf, die Bestandteil eines zweckmäßig achsgleich an ihr hinteres Ende anschließenden Mischkopfes 3 ist, so daß die Mischung der Trockenmischung mit Wasser und Erstarrungsbeschleuniger praktisch erst so in der Spritzdüse erfolgt, daß aus deren vorderer Düsenöffnung der spritzfähig im Durchlauf. gemischte Spritzbeton unter Druck als Strahl austritt. Der Mischkopf 3 bzw. die Spritzdüse ist mit mindestens einem Ventil zur Veränderung bzw. Absperrung des zufließenden Wassers versehen. Das nach Art einer stufenlos einstellbaren Drossel 5 ausgebildete Ventil für die Wasserzufuhr ist zwischen einer Schließstellung und seiner am weitesten geöffneten Stellung mit einer Handhabe 6 stufenlos einstellbar.

Der Mischkopf 3 ist zur Zuführung für die Betonmischung an eine insbesondere achsgleich an sein hinteres Ende anschließende Trockenleitung 7 und für die Wasserzuführung an eine insbesondere radial an ihn anschließende Wasserleitung 8 angeschlossen. Die Wasserleitung 8 und/oder die Trockenleitung 7 können beispielsweise 8 bis 10 m lang sein und sind zweckmäßig durch flexible Schläuche gebildet.

Die Trockenleitung 7 dient zur Zuführung von vorgemischtem Trockenbeton, während die Wasserleitung 8 zur Zuführung einer Mischung aus Wasser und flüssigem Erstarrungsbeschleuniger dient, wobei zweckmäßig in der Regel so gefahren wird, daß die Durchlaufmenge an Betonmischung bzw. die Menge des in dieser enthaltenen Zementes pro Zeiteinheit konstant gehalten wird, ebenso wie dies annähernd für die Durchlaufmenge des Erstarrungsbeschleunigers, nicht jedoch für die Durchlaufmenge des Wassers gilt, die mit Hilfe des Handhebels 6 von dem die Spritzdüse 4 tragenden Bedienungsmann nach Bedarf laufend geändert wird.

Je trockener der Beton mit Hilfe des Ventiles 5 von dem Bedienungsmann eingestellt wird, um so eher wird mit einer geringfügigen Überdosierung an Erstarrungsbeschleuniger gefahren. Während des Betriebes wird also im wesentlichen nur die Wassermenge geändert. Für die Beschleunigermenge ist eine automatische Regelung eingesetzt.

Zur Zuführung der trockenen Betonmischung ist eine fahrbare Fördereinrichtung 9 vorgesehen, an die das vom Mischkopf 3 abgekehrte Ende der Trockenleitung 7 angeschlossen ist. Für die Zuführung des mit Erstarrungsbeschleuniger angereicherten Wassers ist eine Dosiereinrichtung 10 vorgesehen, an deren Ausgang das vom Mischkopf 3 abgekehrte Ende der Wasserleitung 8 angeschlossen ist. Die Dosiereinrichtung 10 weist mindestens drei Eingänge, näm lich wenigstens einen für eine Wasser-Versorgungsleitung 11, mindestens einen für eine Beschleuniger-Versorgungsleitung 13 und mindestens einen für eine Preßluft-Versorgungsleitung 15 auf.

In die Wasser-Versorgungsleitung 11 kann erforderlichenfalls eine zweckmäßig unmittelbar benachbart zur Dosiereinrichtung 10 liegende Förderpumpe 12 zur Erzielung eines genau bestimmbaren Förderdruckes eingeschaltet sein. Die Beschleuniger-Versorgungsleitung 13 ist eingangsseitig an einen Vorratsbehälter 14 in Form eines großvolumigen Druckvorratstankes angeschlossen, der während des Betriebes nicht nachfüllbar ist und aus welchem die Dosiereinrichtung 10 mit dem Erstarrungsbeschleuniger versorgt wird. Der Vorratsbehälter 14 kann beispielsweise ein mehrere Kubikmeter fassender, druckdichter Tank sein, mit der Luftdruck von zweckmäßig etwa 6 bar beaufschlagt wird. Der Vorratsbehälter wird im Betrieb permanent mit Preßluft auf ca. 6 bar gehalten, damit der zum Einspeisen ins Wasser notwendige Differenzdruck gegeben ist. Der Vorratsbehälter 14 ist zweckmäßig als liegender Tank mit Fußstützen, beispielsweise Kufen, ausgebildet.

Die Preßluft-Versorgungsleitung 15 ist über eine Abzweigleitung 16 einerseits an den Vorratsbehälter der Dosiereinrichtung 10 und andererseits über eine Abzweigleitung 17 so an die Fördereinrichtung 9 angeschlossen, daß die in dieser der Trockenleitung 7 zugeführte Betonmischung mit einem Preßluftstrom durch die Trockenleitung 7 bis zum Mischkopf 3 gefördert sowie mit diesem bzw. unter dem Druck dieses Preßluftstromes als Strahl aus der Spritzdüse 4 ausgetragen wird.

Die Trockenspritzmaschine 9 weist einen nach oben offenen Schütt-Trichter 19 auf, über welchem das abgabeseitige Ende eines Förderers 20, beispielsweise eines Bandförde rers liegt. Mit dem Förderer 20 wird von einem von oben nachfüllbaren Zwischenspeicher bzw. einem Vorrats-Silo 21 die trockene Betonmischung in den Schütt-Trichter 19 der Spritzmaschine gefördert, von welchem Druckluft über einen drehenden Rotor mit in den Einlaß der Trockenleitung 7 geblasen und weitergefördert wird.

In der Dosiereinrichtung 10 ist eine Zuführstelle 22 vorgesehen, in welcher das Wasser aus der Versorgungsleitung 11 und der Erstarrungsbeschleuniger aus der Versorgungsleitung 13 zusammengeführt und homogen miteinander vermischt werden. In Durchflußrichtung vor dieser Zuführstelle 22 ist für den Erstarrungsbeschleuniger ein beispielsweise in der Versorgungsleitung 13 angeordnetes Steuer- bzw. Regelventil 23 angeordnet, das beispielsweise ein mit einem elektromagnetischen Antrieb 31 betätigbares Ventil sein kann, welches von einer Regeleinrichtung 24 der Dosiereinrichtung bzw. deren Regler 32 seine Steuersignale über eine Signalleitung 30 erhält. Diese Steuersignale sind abhängig von den Meßergebnissen einer Meßeinrichtung 25, aufgrund von deren Meßergebnissen die Regeleinrichtung 24 arbeitet bzw. die über eine Steuerleitung 27 mit dem Regler 32 verbunden ist. Eine Meßeinrichtung 25 ist in Durchflußrichtung vor der Zuführstelle 22 an der Versorgungsleitung 13 in der Dosiereinrichtung 10 vorgesehen und arbeitet nach Art einer magnetischen bzw. elektrischen Feldmessung viskositätsunabhängig, so daß auf Flügelradzähler oder ähnliche mechanisch arbeitende Meßeinrichtungen verzichtet werden kann.

In der Wasser-Versorgungsleitung 11 kann, bevorzugt innerhalb der Dosiereinrichtung 10, ein Druckregler 35 für den Wasserdruck, insbesondere in Strömungsrichtung vor der Zuführstelle 22 vorgesehen sein, wobei zweckmäßig zwischen der Zuführstelle 22 und dem Druckregler 35 ein Druckmesser 29, insbesondere mit einer optischen Anzeigeeinrichtung 36 zur Ermittlung des Förderdruckes in der Versorgungsleitung 11 angeschlossen ist.

Die Meßeinrichtung 25 beeinflußt zweckmäßig zusätzlich eine Zähleinrichtung 34 bzw. ein Zählwerk, das dafür geeignet ist, als Summenzähler die gesamte Durchflußmenge an Erstarrungsbeschleuniger zu erfassen, anzuzeigen.

Im Betrieb wird die Spritzdüse 4 ausgerichtet gehalten, das Ventil 5 geöffnet und trockene Betonmischung unter Luftdruck in konstanter Menge pro Zeiteinheit gefördert. Zur Veränderung der Betonqualität des Spritzbeton-Strahles wird ausschließlich die zugeführte Flüssigkeitsmenge gesteuert. Falls die zugeführte Flüssigkeitsmenge durch entsprechende Betätigung der Handhabe 6 verringert wird, wird die pro Mengeneinheit des zugeführten Wassers diesem zugeführte Menge an Erstarrungsbeschleuniger entsprechend dem notwendigen Verhältnis Erstarrungsbeschleuniger/Zement erhöht, wobei eine gegenüber der Reduzierung der Durchflußmenge durch die Wasserleitung 8 geringfügig überproportionale Erhöhung der Beschleunigerkonzentration im Wasser vorgesehen werden kann, beispielsweise dadurch, daß die Regelung auch von der Gesamtdurchflußmenge in der Wasserleitung 8 abgeleitet ist. Bei geringerem Naßgrad des ausgebrachten Spritzbetons ist jedoch in der Regel eine Konstanthaltung des relativen Beschleunigeranteiles gegenüber dem relativen Zementanteil in der Betonmischung vorgesehen.

## Ansprüche

1. Verfahren zum Dosieren von flüssigen Erstarrungsbeschleunigern zum Austragen von Spritzbeton, dadurch gekennzeichnet, daß eine relative, beispielsweise mit Zuschlagstoffen zu einer Trokkenmischung gemischte Zementmenge im Durchlauf mit einer relativen, einen Naßgrad des Spritzbetons bestimmenden Wassermenge sowie mit einer relativen, auf die relative Zementmenge als Soll-Wert bezogenen Beschleunigermenge eines Erstarrungsbeschleunigers zu Spritzbeton vermischt wird.

2. Verfahren nach Anspruch 1, dadurch gekennzeichnet, daß ein Ist-Wert der zugeführten relativen Beschleunigermenge laufend gemessen, mit dem Soll-Wert verglichen und dann auf letzteren nachgeregelt wird, daß vorzugsweise die relative Beschleunigermenge vor Zumischung zur Zementmenge im Durchlauf der relativen Wassermenge zugemischt und die so gebildete relative Mischmenge insbesondere in einem Austrag-Mischkopf mit der Trockenmischung im Durchlauf vermischt wird, wobei vorzugsweise das Wasser wenigstens bis zur Vermischung mit dem Erstarrungsbeschleuniger mit einem gegenüber diesem geringeren Förderdruck gefördert und hierfür insbesondere der Förderdruck des Wasser gesteuert bzw. geregelt wird.

3. Verfahren nach Anspruch 1 oder 2, dadurch gekennzeichnet, daß die relative Beschleunigermenge innerhalb der Regeltoleranz im wesentlichen konstant gegenüber der relativen Zementmenge, insbesondere in der Größenordnung von 5 gehalten und/oder nur unter Änderung der relativen Wassermenge das Mischungsverhältnis zwischen Wasser und Erstarrungsbeschleuniger geändert wird, daß vorzugsweise die relative Zementmenge im wesentlichen konstant gefördert und nur die relative Wassermenge sowie innerhalb der, insbesondere in der Größenordnung von höchstens ± 0,5 % liegenden, Regeltoleranz die relative Beschleunigermenge geändert werden und daß vorzugsweise die relative Beschleunigermenge bei Außentemperatur-Abfall, Überkopf-Auftrag des Spritzbetons o.dgl. gegenüber der relativen Zementmenge durch Steuerung erhöht und insbesondere der eingestellte Wert durch Sperrung gesichert wird.

4. Verfahren nach einem der vorhergehenden Ansprüche, dadurch gekennzeichnet, daß der Erstarrungsbeschleuniger zwischen einem Vorrat und einer Zumischstelle im wesentlichen nur entlang einer von bewegten Förderteilen freien Leitungsverbindung gefördert, insbesondere der Vorrat zur Förderung mit einem Luftdruckpolster beaufschlagt wird, daß vorzugsweise die Beschleunigermenge je Zeiteinheit in Durchflußrichtung insbesondere vor einer Regelstelle im wesentlichen viskositätsunabhängig bzw. induktiv gemessen wird und daß vorzugsweise die absolute durchfließende Beschleunigermenge, insbesondere durch Aufsummieren der je Zeiteinheit durchfließenden Beschleunigermenge gemessen und der Mengenwert gespeichert wird.

5. Verfahren nach einem der vorhergehenden Ansprüche, dadurch gekennzeichnet, daß ein Meßsignal der Beschleuniger-Durchflußmenge unmittelbar zu einem, insbesondere manuell bzw. in Abhängigkeit von Veränderungen der relativen Wassermenge veränderbaren Stellsignal verarbeitet und das Stellsignal für den Antrieb einer Veränderung eines Durchflußquerschnittes der Regelstelle für den Beschleuniger umgesetzt wird, daß vorzugsweise ein Signal zur Dosierung des Erstarrungsbeschleunigers vom Mischkopf als Funktion von dessen pro Zeiteinheit ausgetragener Mischmenge über die fließende Mischmenge stromaufwärts gegeben wird, wobei vorzugsweise die relative Beschleunigermenge gegenüber der relativen Wassermenge mindestens umgekehrt proportional, insbesondere geringfügig überproportional verändert und/oder die relative Wassermenge im Vergleich zur relativen Mischmenge aus Wasser und Erstarrungsbeschleuniger bei einer Reduzierung der Mischmenge überproportional reduziert wird.

6. Verfahren nach einem der vorhergehenden Ansprüche, dadurch gekennzeichnet, daß bei einer Veränderung des Naßgrades des Spritzbetons die relative Beschleunigermenge zumindest gegenüber der relativen Wassermenge, und zwar gegenüber dieser gegenläufig, verändert wird, daß die relative Beschleunigermenge gegenüber der relativen Trockenmenge im wesentlichen gleichzeitig zwischen Null und weniger als gegenüber der relativen Wassermenge verändert wird und daß vorzugsweise der Naßgrad des Spritzbetons über eine vorbestimmte Naßgradspanne verändert wird sowie die relative Beschleunigermenge gegenüber der relativen Wassermenge über im wesentlichen die gesamte Naßgradspanne in beiden Richtungen von deren Veränderung annähernd stufenlos kontinuierlich gegenläufig verändert wird.

7. Verfahren nach einem der vorhergehenden Ansprüche, dadurch gekennzeichnet, daß zumindest die Veränderung der relativen Wassermenge erfaßt und als Funktion der erfaßten Veränderung, insbesondere der pro Zeiteinheit erfaßten Wasserdurchflußmenge, die pro Zeiteinheit zudosierte durchfließende Beschleunigermenge bestimmt wird und daß vorzugsweise die sich aufgrund der Veränderung der relativen Wassermenge ergebende Veränderung der Mischmenge aus Wasser und Erstarrungsbeschleuniger erfaßt und danach die gegenläufige Veränderung der relativen Beschleunigermenge bestimmt wird.

8. Verfahren nach einem der vorhergehenden Ansprüche, dadurch gekennzeichnet, daß der Erstarrungsbeschleuniger flüssig, insbesondere in wäßrigem Medium zudosiert wird und daß vorzugsweise die Menge des Erstarrungsbeschleunigers in Form einer Volumenmenge dosiert wird.

9. Vorrichtung zum Mischen und kontinuierlichen Austragen von Spritzbeton, mit einer Wasserzuführung (8) und einer Trockenzuführung (7) zur Zuführung einer Betonmischung und mit einer Zuführeinrichtung zur Zuführung eines Erstarrungsbeschleunigers, dadurch gekennzeichnet, daß für die Zuführung des Erstarrungsbeschleunigers eine Dosiereinrichtung (10) vorgesehen ist, die insbesondere von einer Regeleinrichtung zur auf einen Soll-Wert gerichteten relativen Veränderung eines Ist-Wertes der zugeführten Beschleunigermenge beeinflußt ist.

10. Vorrichtung nach Anspruch 9, dadurch gekennzeichnet, daß eine Wasserleitung (8) und eine Trockenleitung (9) für die Betonmischung zum Anschluß an einen Mischkopf (3) vorgesehen und die Zuführeinrichtung an die Wasserleitung angeschlossen ist, der insbesondere eine Drosselkammer (5) zur Veränderung der durchlaufenden Wassermenge zugeordnet ist und/oder an einer Durchflußleitung für den Beschleuniger in Durchflußrichtung zuerst ein, insbesondere induktives Durchfluß-Meßgerät (30) und danach ein von einem Antrieb (34) beeinflußtes Regelventil (23a) vorgesehen sind, wobei das Durchfluß-Meßgerät (30) über eine Meßsignal-Leitung (32) mit einem insbesondere einstellbaren Regler (31) verbunden ist, der seinerseits über eine Stellsignal-Leitung (33) mit dem Antrieb (34) des Regelventiles (23a) verbunden ist.

11. Vorrichtung nach Anspruch 9 oder 10, dadurch gekennzeichnet, daß eine Zähleinrichtung (36) für die absolute Beschleunigermenge vorgesehen, insbesondere über eine Meßsignal-Leitung (35) mit dem Durchfluß-Meßgerät (30) verbunden ist und/oder daß eine Druckregeleinrichtung für die Wasserförderung vorgesehen ist, die insbesondere einen in Strömungsrichtung nach einer Wasserpumpe (12) o.dgl. angeordneten Druckregler (35) aufweist, dem vorzugsweise ein Druck-Anzeigegerät (36) zugeordnet ist.

12. Vorrichtung nach einem der Ansprüche 9 bis 11, dadurch gekennzeichnet, daß eine Steuereinrichtung (24) zur gegenüber der Wassermenge gegenläufigen relativen Ver änderung der Beschleunigermenge von einer die Veränderung einer Durchflußmenge, insbesondere im wesentlichen der Wasser-Durchflußmenge messenden Meßeinrichtung (25) beeinflußt und vorzugsweise die Steuereinrichtung (24) zur vollautomatischen Veränderung der relativen Beschleunigermenge als Funktion der Veränderung der Wassermenge ausgebildet ist.

13. Vorrichtung nach einem der Ansprüche 9 bis 12, dadurch gekennzeichnet, daß die Dosiereinrichtung (10) eine Zuführung für den Erstarrungsbeschleuniger in die Wasserleitung (8) aufweist, daß die Zuführstelle (22) in Durchflußrichtung insbesondere im Abstand vor dem Mischkopf (3) vorgesehen ist und daß vorzugsweise ein Meßglied (26) der Meßeinrichtung (25) in Durchflußrichtung, insbesondere unmittelbar, hinter der Zuführstelle (22) für den Erstarrungsbeschleuniger zur Messung der Veränderung der Mischmenge aus Wasser und Erstarrungsbeschleuniger angeordnet ist.

14. Vorrichtung nach einem der Ansprüche 9 bis 13, dadurch gekennzeichnet, daß das Meßglied (26) einer Meßeinrichtung (25) als viskositätsunabhängig messendes Meßglied (26) ausgebildet ist, insbesondere gegenüber der Meßstelle im wesentlichen mechanisch feststehend im Bereich eines auf voller Weite offenen Leitungsabschnittes angeordnet und vorzugsweise durch ein Meßglied (26) zur elektromagnetischen Feldmessung gebildet ist.

15. Vorrichtung nach einem der Ansprüche 9 bis 14, dadurch gekennzeichnet, daß wenigstens die Regeleinrichtung (24) gegen Betätigung absperrbar, insbesondere in einem Gehäuse o.dgl. angeordnet ist, das vorzugsweise im wesentlichen die gesamte Regel- und/oder Steuereinrichtung der Dosiereinrichtung (10) aufnimmt und daß vor zugsweise der, insbesondere eine Spritzdüse (4) aufweisende, Mischkopf (3) mit der Dosiereinrichtung (10) flexibel im wesentlichen frei beweglich verbunden sowie insbesondere das Meßglied (26) der Meßeinrichtung (25) an der Dosiereinrichtung (10) vorgesehen ist.

16. Vorrichtung nach einem der Ansprüche 9 bis 15, dadurch gekennzeichnet, daß mindestens eine Druckluft-Fördereinrichtung für die Trockenmenge und/oder für den Erstarrungsbeschleuniger vorgesehen ist und daß vorzugsweise die Trockenleitung (7) an eine Druckluftleitung (15) angeschlossen und/oder ein Vorratsbehälter (14) für den Erstarrungsbeschleuniger für die Aufnahme einer Druckluft-Vorlage ausgebildet ist.

17. Anlage zum Austragen und laufenden Herstellen von Spritzbeton, mit einer von einer Druckquelle ausgehenden Wasserleitung (8) und einer von einer Druckquelle ausgehenden, für eine Betonmischung vorgesehenen Trockenleitung (7), die an einen eine Austragöffnung aufweisenden Mischkkopf (3) angeschlossen sind, sowie mit einer Zuführeinrichtung zur Zuführung eines Erstarrungsbeschleunigers in das Wasser, wobei der Wasserleitung (8) eine einstellbare Drossel (5) zur Veränderung der durchlaufenden Wassermenge zugeordnet ist, dadurch gekennzeichnet, daß die Wasserleitung (8) an eine Dosiereinrichtung (10) für den Erstarrungsbeschleuniger angeschlossen ist, die insbesondere eine Regeleinrichtung für die gegenüber einem Soll-Wert relative Veränderung der Beschleunigermenge aufweist.

18. Anlage nach Anspruch 17, dadurch gekennzeichnet, daß eine Steuereinrichtung (24) für die gegenüber der Veränderung der Wassermenge gegenläufige relative Veränderung der Beschleunigermenge vorgesehen ist.

19. Anlage nach Anspruch 17 oder 18, dadurch gekennzeichnet, daß die Trockenleitung (7) an eine fahrbare Fördereinrichtung (9) für die Betonmischung angeschlossen ist und daß die Dosiereinrichtung (10) mit der Steuereinrichtung (25) vorzugsweise an dieser Fördereinrichtung (9) angeordnet ist.